# EUROPEAN PATENT APPLICATION

(11) **EP 2 611 023 A1**
(43) Date of publication of application: **03.07.2013**
(21) Application number: 12796096.1
(22) Date of filing: 22.05.2012
(51) Int. Cl.: H02M 7/5387

(54) **INVERTER DEVICE AND SOLAR GRID-CONNECTED PHOTOVOLTAIC SYSTEM USING SAME**

(30) Priority: 25.11.2011 CN 201110381814
(71) Applicant: Huawei Technologies Co., Ltd, Shenzhen, Guangdong 518129 (CN)
(72) Inventor: LI, Quan, Shenzhen Guangdong 518129 (CN)
(74) Representative: Maiwald Patentanwalts GmbH
(86) International application number: PCT/CN2012/075848
(87) International publication number: WO 2012/167691

(57) **Abstract**

Embodiments of the present invention provide an inverter apparatus and a solar photovoltaic grid-connected system, related to the field of solar photovoltaic power generation technologies, to solve the problem that the energy consumption of a boost circuit and the switching loss of an inverter in an existing inverter apparatus are great. In the embodiments, when the voltage of a direct current power supply for supplying power for an inverter apparatus is small, a boost circuit and the direct current power supply may simultaneously supply direct current electric energy to an inverter in the inverter apparatus directly. In this case, the inverter works in three-level inversion mode, not only reducing the energy consumption of the boost circuit but also reducing the switching loss of the inverter. Accordingly, when the inverter apparatus is applied to a solar photovoltaic grid-connected system, the efficiency of the entire system can be remarkably improved.

## Description

### FIELD OF THE INVENTION

The present invention relates to the field of solar photovoltaic power generation technologies, and in particular, to an inverter apparatus and a solar photovoltaic grid-connected system using the same.

### BACKGROUND OF THE INVENTION

With exhaust of the conventional energy and gradual deterioration of the environment, solar photovoltaic power generation, as a new and clean energy industry, gains rapid development, with an annual growth of 30%.

Inverter apparatuses are bridges associating solar photovoltaic power generation and a power grid, and are necessary devices in the solar photovoltaic power generation grid-connected system. The inverter apparatuses are used to convert a direct current generated on the solar panel to an alternating current required by the power grid.

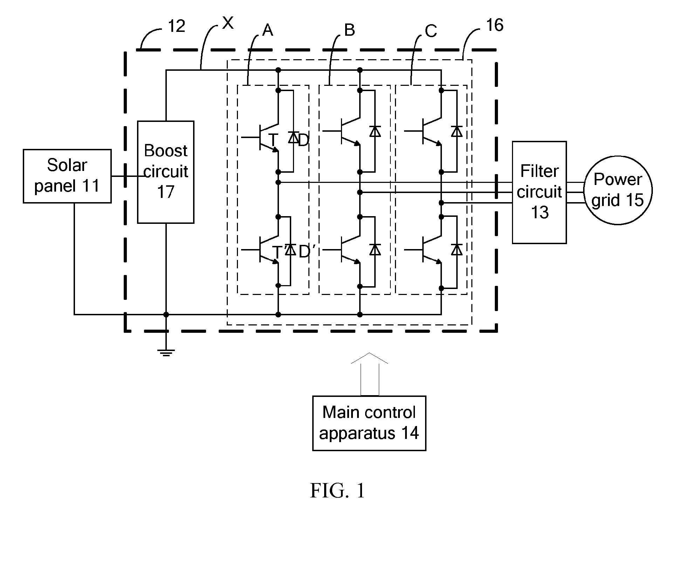

FIG. 1 shows the structure of a solar photovoltaic power generation grid-connected system in the prior art. The system includes: a solar panel 11, an inverter apparatus 12, a filter circuit 13, a main control apparatus 14, and a power grid 15. The inverter apparatus 12 includes: a bridge inverter 16 and a boost circuit 17.

The bridge inverter 16 as shown in FIG. 1 is a two-level three-phase inverter bridge, including three bridge arms (bridge arms A, B and C). Each bridge arm has the same structure. In the bridge arm A, a power switch transistor T is serially connected to a power switch transistor T', and a diode D is connected in parallel to the power switch transistor T, a diode D' is connected in parallel to the power switch transistor T', and the source of the power switch transistor T outputs an alternating current voltage/current. The alternating current voltages/currents output by the three bridge arms are filtered by the filter circuit and then connected to the power grid.

After boosting the voltage of the solar panel 11, the boost circuit 17 supplies a busbar X with direct current electric energy of the voltage required by the bridge inverter 16 to work properly, to prevent a case in which the bridge inverter 16 fails to work properly when the voltage of the solar panel 11 is too small. The busbar X is a line supplying direct current voltage for the inverter 16. The main control apparatus 14 is configured to provide a trigger pulse signal for the bridge inverter 16 to control the bridge inverter 16 to output the converted three-phase alternating current electric energy.

When the solar photovoltaic power generation grid-connected system is used for power generation, the two-level three-phase inverter has the voltage reduction and control function, the peak value of the alternating current voltage output by the inverter must be smaller than the amplitude of the direct current voltage input to the inverter, and the input direct current voltage is supplied by the boost circuit. Therefore, the output voltage and working range of the inverter depend on the direct current voltage supplied by the boost circuit. Accordingly, the energy consumption of the boost circuit accounts for a large proportion of the energy consumption of the entire system, resulting in the difficulty in improving the efficiency (the ratio of the output power to the input power in the system) of the entire system.

In addition, when the voltage of the solar panel is large, use of the boost circuit enables the busbar voltage of the inverter to rise, so that the switching loss of the inverter is increased, causing further reduction of the efficiency of the entire system.

### SUMMARY OF THE INVENTION

Embodiments of the present invention provide an inverter apparatus and a solar photovoltaic grid-connected system using the same, capable of remarkably reducing energy consumption of a boost circuit and switching loss of an inverter when it is ensured that the inverter can work properly.

To meet the preceding purpose, embodiments of the present invention adopt the following technical solutions:

An inverter apparatus includes a bridge inverter and a boost circuit, where the bridge inverter includes at least one bridge arm, the at least one bridge arm including: first to third power switch transistors and a first diode; where the first diode and the first power switch transistor form a supplementary branch circuit, and the first diode is forward and serially connected to the source and drain of the first power switch transistor; and the current input end of the supplementary branch circuit is electrically connected to the voltage output end of the boost circuit; the drain of the second power switch transistor is electrically connected to the voltage output end of the boost circuit; the source of the second power switch transistor, the drain of the third power switch transistor, the current output end of the supplementary branch circuit, and an alternating current output end are electrically connected; and the alternating current output end is configured to supply an alternating current voltage/current to a power grid; the source of the third power switch transistor is electrically connected to the negative pole of a direct current power supply, and the positive pole of the direct current power supply is electrically connected to the voltage input end of the boost circuit; and the boost circuit is configured to, when the voltage of the direct current power supply is smaller than the voltage required by the bridge inverter to work properly, enable the voltage output by the voltage output end of the boost circuit to be not smaller than the voltage required by the bridge inverter to work properly.

A solar photovoltaic grid-connected system includes a solar panel, the above inverter apparatus, a filter circuit, a main control apparatus, and a power grid; where the inverter apparatus is configured to convert the direct current power supply supplied by the solar panel to alternating current power supply by using the main control apparatus, and transfer the alternating current power supply to the power grid by using filter of a filter circuit connected between the inverter apparatus and the power grid.

In the inverter apparatus and solar photovoltaic grid-connected system using the same according to the embodiments of the present invention, when the voltage of the direct current power supply for supplying power for the inverter apparatus is small, the boost circuit and the direct current power supply may simultaneously supply direct current electric energy for the inverter in the inverter apparatus directly. In this case, the inverter works in three-level inversion mode, not only reducing the energy consumption of the boost circuit but also reducing the switching loss of the inverter. Accordingly, when the inverter apparatus is applied to the solar photovoltaic grid-connected system, the efficiency of the entire system is remarkably improved.

### BRIEF DESCRIPTION OF THE DRAWINGS

To illustrate the technical solutions according to the embodiments of the present invention or in the prior art more clearly, the accompanying drawings required for describing the embodiments or the prior art are introduced in the following briefly. Apparently, the accompanying drawings in the following descriptions merely show some of the embodiments of the present invention, and persons of ordinary skill in the art can obtain other drawings according to the accompanying drawings without creative efforts.

FIG. 1 is a structural block diagram of a solar photovoltaic grid-connected system in the prior art;

FIG. 2 is a circuit diagram of an inverter apparatus according to a first embodiment of the present invention;

FIG. 3A is a circuit diagram of a boost circuit in the prior art;

FIG. 3B is a circuit diagram of the boost circuit as shown in FIG. 3A with an added bypass unit;

FIG. 4A to FIG. 4C show an improved solution of a circuit between the midpoint of capacitors C1 and C2 and the output point of an alternating current voltage on a bridge arm according to the first embodiment of the present invention;

FIG. 5 to FIG. 8 are circuit diagrams of a varied inverter apparatus according to the first embodiment of the present invention;

FIG. 9 is a circuit diagram of substitution of a boost circuit, a bypass unit and a switch unit with specific circuits according to FIG. 7; and

FIG. 10 is a block diagram of a solar photovoltaic grid-connected system according to a second embodiment of the present invention.

### DETAILED DESCRIPTION OF THE EMBODIMENTS

The technical solutions of the embodiments of the present invention are described clearly and completely with reference to accompanying drawings. Apparently, the embodiments described are merely some rather than all embodiments of the present invention. All other embodiments obtained by persons skilled in the art based on the embodiments given herein without making any creative effort should fall within the protection scope of the present invention.

### Embodiment 1

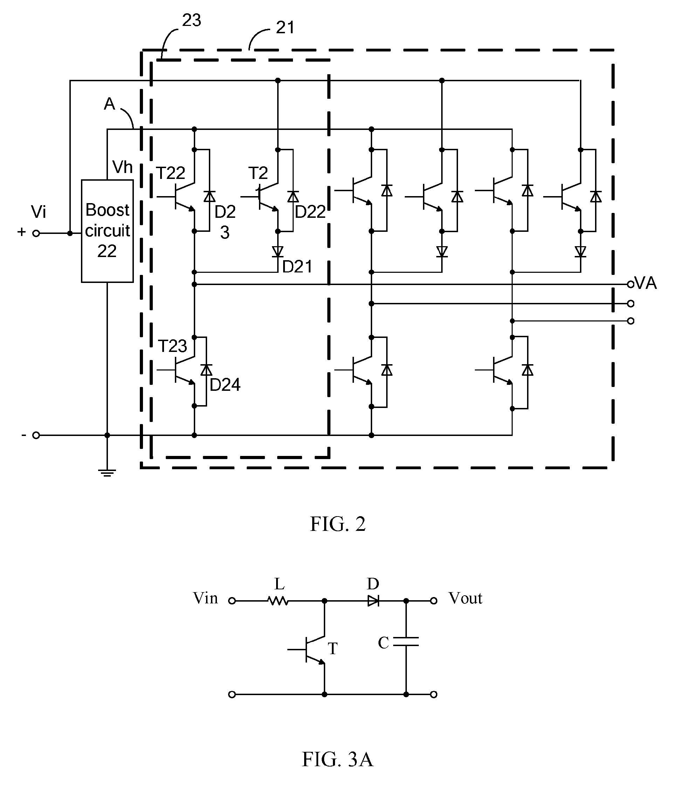

This embodiment provides an inverter apparatus, configured to convert direct current electric energy to alternating current electric energy, to supply alternating current electric energy for a load, such as a power grid and a motor. As shown in FIG. 2, the inverter apparatus has the following structure.

The inverter apparatus includes a bridge inverter 21 and a boost circuit 22, where the bridge inverter includes at least one bridge arm. The bridge inverter as shown in FIG. 2 has three bridge arms, and each bridge arm has the same structure and is capable of outputting three-phase alternating current electric energy. Definitely, the number of bridge arms is not limited to three, and may be increased or decreased according to a requirement of the load, to obtain the increased or decreased number of phases of alternating current electric energy. The following uses a bridge arm 23 illustrated in the dotted block to describe the structure of the at least one bridge arm.

The bridge arm 23 includes: first to third power switch transistors (T21, T22, and T23) and a first diode D21. The first diode D21 and the first power switch transistor T21 form a supplementary branch circuit. The first diode D21 is forward and serially connected to the source and drain of the first power switch transistor T21, that is, the source of the first power switch transistor T21 as shown in FIG. 2 is electrically connected to the positive pole of the first diode D21 (alternatively, the drain of the first power switch transistor is electrically connected to the negative pole of the first diode). The current input end of the supplementary branch circuit is electrically connected to the voltage output end of the boost circuit.

The drain of the second power switch transistor T22 is electrically connected to the voltage output end of the boost circuit 22; the source of the second power switch transistor T22, the drain of the third power switch transistor T23, the current output end of the supplementary branch circuit, and an alternating current output end VA are electrically connected; the source of the third power switch transistor T23 is electrically connected to the negative pole of a direct current power supply; and the positive pole of the direct current power supply is electrically connected to the voltage input end of the boost circuit 22.

The alternating current output end VA is configured to output alternating current voltage/current to a power grid (not shown in the FIG).

The boost circuit 22 is configured to, when the voltage Vi output by the direct current power supply is smaller than the voltage required by the bridge inverter 21 to work properly, enable the voltage Vh output by the voltage output end of the boost circuit 22 to be not smaller than the voltage required by the bridge inverter to work properly.

In the inverter apparatus, the first to third power switch transistors may be metal-oxide-semiconductor field-effect transistors (Metal-Oxide-Semiconductor Field-Effect Transistor, abbreviated to MOSFET), or insulated gate bipolar transistors (Insulated Gate Bipolar Transistor, abbreviated to IGBT), or integrated gate commutated thyristors (Integrated Gate Commutated Thyristors, abbreviated to IGCT), or other controllable switch transistors. When the first to third power switch transistors are IGBTs or IGCTs, preferably, a diode is reversely and connected in parallel to the source and drain of each of the first to third power switch transistors, to provide a reverse current path when the source and drain of the power switch transistor withstand a reverse voltage. A parasitic diode is formed between the drain and source of a MOSFET, so the reverse current path may be provided when the source and drain of the MOSFET withstand the reverse voltage. Definitely, a diode may also be reversely and connected in parallel between the drain and source of the MOSFET to provide a more reliable reverse current path.

FIG. 2 shows a scenario in which the source and drain of each of the first to third power switch transistors are reversely and connected in parallel to a diode. In this scenario, a second diode D22 is reversely and connected in parallel to the source and drain of the first power switch T21; a third diode D23 is reversely and connected in parallel to the source and drain of the second power switch transistor T22; and a fourth diode D24 is reversely and connected in parallel to the source and drain of the third power switch transistor T23.

In the inverter apparatus, the first diode is forward and serially connected to the source and drain of the first power switch transistor in the following two connection manners:

1. The positive pole of the first diode is electrically connected to the source of the first power switch transistor (as shown in FIG. 2).

Correspondingly, referring to FIG. 2, the drain of the first power switch transistor T21 is electrically connected to the negative pole of the second diode D22; and the source of the first power switch transistor T21, the positive pole of the second diode D22, and the positive pole of the first diode D21 are electrically connected.

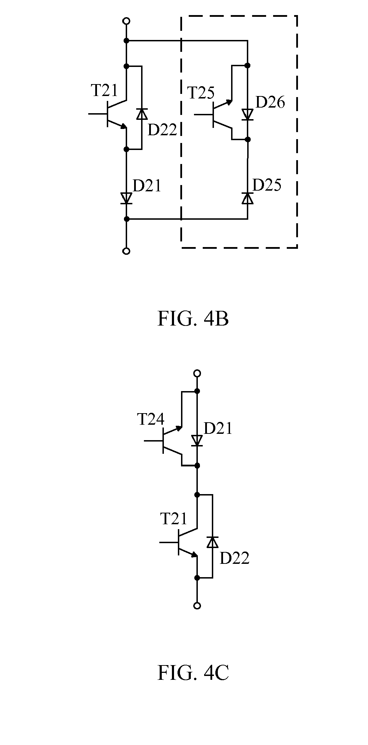

2. The negative pole of the first diode is electrically connected to the negative pole of the second diode (as shown in FIG. 4C).

Correspondingly, the drain of the first power switch transistor T21, the negative pole of the second diode D22, and the negative pole of the first diode D21 are electrically connected; and the source of the first power switch transistor T21 is electrically connected to the positive pole of the second diode D22.

In FIG. 2, the function of the first diode D21 is to prevent the first power switch transistor T21 serially connected to the first diode D21 from withstanding a reverse voltage. Therefore, no matter whether the first diode D21 is connected to the source of the first power switch transistor T21 as shown in FIG. 2, or the first diode D21 is connected to the drain of the first power switch transistor T21 as shown in FIG. 4C, the above function may be exercised.

When the inverter apparatus is used, if the voltage Vi of the direct current power supply is smaller than the voltage required by the bridge inverter 21 to work properly, the boost circuit 22 starts working, to enable the voltage Vh output by the voltage output end of the boost circuit 22 to be not smaller than the voltage required by the bridge inverter 21 to work properly. In this way, the bridge inverter 21 not only obtains the direct current electric energy whose voltage is the voltage Vi from the direct current power supply, but also obtains the direct current electric energy whose voltage is the voltage Vh from the boost circuit 22. In this case, a control pulse is applied to the bridge inverter 21 by using an external control circuit, and then electric potential of the bridge inverter 21 has three levels, that is, Vh, Vi and 0, so that the bridge inverter 21 works in three-level inversion mode.

Only when the bridge inverter 21 outputs the Vh level (when a power switch transistor whose drain is electrically connected to the voltage output end of the boost circuit, for example, the second power switch transistor T22, is conducted), the boost circuit 22 is required to supply output power; however, when another level is output, the direct current power supply still supplies output power to the bridge inverter 21 directly. Therefore, the energy consumption of the boost circuit 22 can be greatly reduced. Experiment shows that when 30 kW alternating current electric energy needs to be supplied to the load, if a traditional inverter apparatus in which only a boost circuit supplies direct current electric energy is used, the boost circuit needs to supply more than 30 kW direct current electric energy; however, if the inverter apparatus according to this embodiment is used, the boost circuit needs to supply only about 5 kW direct current electric energy, and the remaining direct current electric energy is supplied by the direct current power supply.

In addition, when the voltage Vi of the direct current power supply is smaller than the voltage required by the bridge inverter 21 to work properly, because the bridge inverter 21 works in three-level inversion mode, advantages, such as low switching loss and a small ripple wave of output inductance, are presented.

When the voltage Vi of the direct current power supply is not smaller than (that is, larger than or equal to) the voltage required by the bridge inverter 21 to work properly, the direct current power supply may supply electric energy to the bridge inverter 21. In this case, the boost circuit 22 does not work. The boost circuit 22 that does not work stays in any one of the following two states.

1. The boost circuit 22 stays in the open state. The voltage input end is disconnected from the voltage output end, and the circuit does not output voltage.

2. The boost circuit 22 stays in the short-circuit state. The voltage input end and the voltage output end are short-circuited, and the output voltage Vh is equal to the voltage Vi of the direct current power supply.

When the boost circuit 22 is opened, the external control circuit does not apply a control pulse to the second power switch transistor T22, so that the direct current electric energy whose voltage is the voltage Vi is only supplied by the direct current power supply to the bridge inverter 21. That is, the bridge inverter 21 works in two-level inversion mode.

When the boost circuit 22 is short-circuited, Vh is equal to the voltage Vi of the direct current power supply. Changing control logic of the control pulse enables the bridge inverter 21 to work in any one of the following states. In these three states, the bridge inverter 21 works in two-level inversion mode.

1. All power switch transistors work.

2. All power switch transistors except the second power switch transistor T22 work.

3. All power switch transistors except the first power switch transistor T21 work.

The boost circuit 22 may be specifically a boost circuit (referring to FIG. 3A) or another circuit having the function of boosting a direct current voltage known to a person skilled in the art.

The boost circuit as shown in FIG. 3A includes: an inductor L, a power switch transistor T, a diode D, and a capacitor C. When the circuit does not work, that is, when the power switch transistor T is opened, the output voltage Vout is equal to the input voltage Vin, which is equivalent to a short-circuit between the voltage output end and the voltage input end.

For some boost circuits, when each of the circuits does not work, the voltage output end may be disconnected from the voltage input end. If it needs to obtain, at the voltage output end, the voltage that is the same as the voltage at the voltage input end, a bypass unit may be connected in parallel between the voltage input end and the voltage output end of the boost circuit, to short-circuit the voltage input end and the voltage output end of the boost circuit when the voltage of direct current power supply is not smaller than the voltage required by the bridge inverter to work properly.

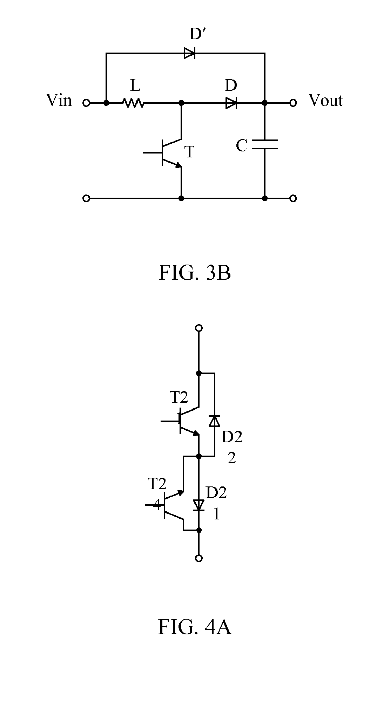

FIG. 3B shows the structure of a bypass unit arranged in the boost circuit as shown in FIG. 3A. The parts in FIG. 3B which are the same as those in FIG. 3A use the same reference signs in FIG. 3A. A diode D' connected in parallel between the voltage input end and the voltage output end of the boost circuit may be used as a bypass circuit. The positive pole of the diode D' is electrically connected to the voltage input end, and the negative pole of the diode D' is electrically connected to the voltage output end. Definitely, the bypass unit may also another circuit or element, for example, a switch element such as a transistor, relay, or contactor, capable of short-circuiting the voltage input end and the voltage output end of the boost circuit when the voltage of the direct current power supply is not smaller than the voltage required by the bridge inverter to work properly.

The above describes the scenario in which the boost circuit 22 does not work when the voltage Vi of the direct current power supply is not smaller (that is, larger than or equal to) the voltage required by the bridge inverter 21 to work properly. Because the boost circuit 22 does not work, no electric energy is consumed, thereby reducing the energy consumption of the inverter apparatus.

If the boost circuit 22 constantly stays in the working state, the boost circuit as shown in FIG. 3A is taken as an example, when the circuit is working, the external control circuit controls the power switch transistor T to be conducted, and the inductor L starts storing energy. In this case, the capacitor supplies the output voltage Vout to the load. Subsequently, the control circuit controls the power switch transistor T to be opened, and the inductor L releases energy to charge the capacitor C, so that the output voltage Vout rises. The output voltage Vout may be controlled by controlling the switching frequency of the power switch transistor T. When the voltage Vi of the direct current power supply is not smaller than (that is, larger than or equal to) the voltage required by the bridge inverter 21 to work properly, the voltage of a busbar A of the bridge inverter 21 may rise due to working of the boost circuit 22. This causes the increase of the switching loss of the bridge inverter 21 as compared with the case in which the boost circuit 22 does not work. However, because Vh is larger than Vi in the boost circuit 22 and the bridge inverter 21 works in three-level inversion state, the energy consumption of the boost circuit and the switching loss of the inverter according to this embodiment are low as compared with the prior art.

In this embodiment, when the voltage of the direct current power supply is small, the boost circuit and the direct current power supply may simultaneously supply direct current electric energy to the inverter directly, so that the inverter works in three-level inversion mode, not only reducing the energy consumption of the boost circuit but also reducing the switching loss of the inverter. Accordingly, when the inverter apparatus is applied to a solar photovoltaic grid-connected system, the efficiency of the entire system can be remarkably improved.

In the inverter apparatus, a fourth power switch transistor T24 (as shown in FIG. 4A) may also be arranged in the bridge arm. The source and drain of the fourth power switch transistor T24 are reversely and connected in parallel to the first diode D21, that is, the drain of the fourth power switch transistor T24 is electrically connected to the negative pole of the first diode D21, and the source of the fourth power switch transistor T24 is electrically connected to the positive pole of the first diode D21, so that when the bridge inverter 21 outputs the Vi level, an inductive current in the bridge inverter 21 has a two-way path. In this way, when the bridge inverter 21 is in an inverter negative semi-cycle and outputs no power, the Vi level may still be used with freewheeling of the fourth power switch transistor T24. This facilitates reduction of the switching loss of the bridge inverter 21 in the working state, and reduces the ripple wave of output inductance.

FIG. 4A, FIG. 4B, and FIG. 4C show an improved solution of a circuit between the positive pole of the direct current power supply and the output point of the alternating current voltage in a bridge arm (a bridge arm 23) of the bridge inverter 21 as shown in FIG. 2. The parts in FIG. 4A, FIG. 4B, and FIG. 4C which are the same as those in FIG. 2 use the same reference signs in FIG. 2. In FIG. 4A, the fourth power switch transistor T24 connected in parallel between the two ends of the first diode D21 provides a freewheeling path for the inductive current in the bridge inverter.

Definitely, the circuit as shown in FIG. 4B may also provide a freewheeling path for the inductive current in the bridge inverter. As shown in FIG. 4B, a freewheeling branch (circuit shown in the dotted block) may be connected in parallel to the supplementary branch circuit formed by the first power switch transistor T21, the first diode D21, and the second diode D22. The freewheeling branch includes a fifth power switch transistor T25 and a fifth diode D25. The source of the fifth power switch transistor T25 is electrically connected to the current input end of the supplementary branch circuit. The drain of the fifth power switch transistor T25 is electrically connected to the negative pole of the fifth diode D25. The positive pole of the fifth diode D25 is electrically connected to the current output end of the supplementary branch circuit.

The fourth and fifth power switch transistors may be MOSFETs, IGBTs, IGCTs, or other controllable switch transistors. When the fifth power switch transistor T25 is an IGBT or an IGCT, preferably, a diode (a sixth diode D26 as shown in FIG. 4B) is reversely and connected in parallel to the source and drain of the fifth power switch transistor, to provide a reverse current path when the source and drain of the fifth power switch transistor T25 withstand a reverse voltage. A parasitic diode is formed between the drain and source of the MOSFET, so the reverse current path may be provided when the source and drain of a MOSFET withstand the reverse voltage. Definitely, a diode may also be reversely and connected in parallel between the drain and source of the MOSFET to provide a more reliable reverse current path.

FIG. 4C shows the structure of another freewheeling path, which is similar to the structure shown in FIG. 4A. The difference lies in that the negative pole of the first diode D21 is electrically connected to the drain of the first power switch transistor T21 so that the fourth power switch transistor T24 exercising a freewheeling function is exchanged with the first power switch transistor T21. It has been described that either the negative pole of the first diode D21 may be electrically connected to the drain of the first power switch transistor T21 or the positive pole of the first diode D21 may be electrically connected to the source of the first power switch transistor T21. However, any of the two connection positions will not affect the protection function exercised by the first diode D21 to the first power switch transistor T21. Therefore, the circuit structure as shown in FIG. 4C also exercises the freewheeling function.

The structure of the freewheeling path is not limited to the above three structures, and may be another circuit capable of freewheeling the inductive current in the inverter known to a person skilled in the art.

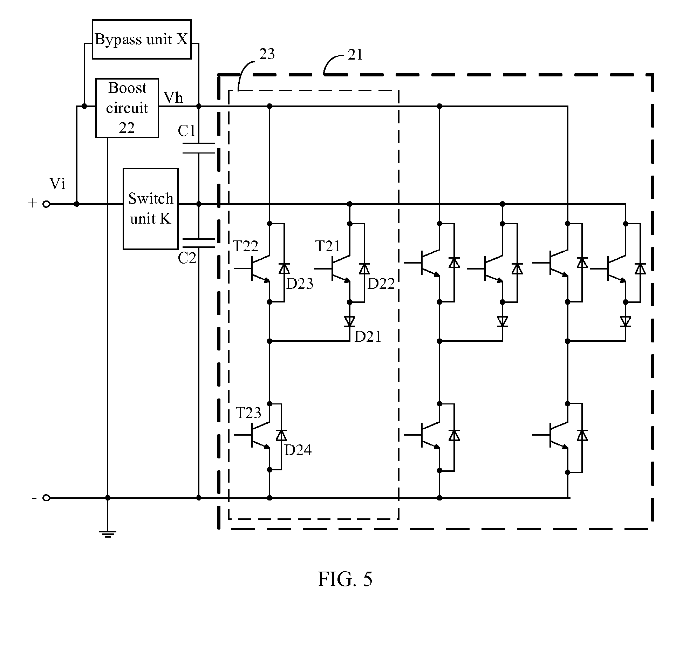

The inverter apparatus may also have the structure as shown in FIG. 5. The parts in the FIG. 5 which are the same as those in FIG. 2 use the same reference signals as those in FIG. 2. The inverter apparatus as shown in FIG. 5 is different from that as shown in FIG. 2 in that: a bypass unit X is connected in parallel between the voltage input end and the voltage output end of the boost circuit; and a first capacitor C1, a second capacitor C2, and a switch unit K are added; where one end of the first capacitor C1 is electrically connected to the voltage output end of the boost circuit 22, the other end of the first capacitor C1, the output end of the switch unit K, and one end of the second capacitor C2 are electrically connected; the input end of the switch unit K is electrically connected to the voltage input end of the boost circuit 22; and the other end of the second capacitor C2 is electrically connected to the negative pole of the direct current power supply.

The switch unit K is configured to, when the voltage Vi of the direct current power supply is smaller than the voltage required by the bridge inverter 21 to work properly, electrically connect the drain of the first power switch transistor T21 and the positive pole of the direct current power supply; and otherwise, electrically disconnect the drain of the first power switch transistor T21 from the positive pole of the direct current power supply. The switch unit K may be a transistor, for example, a MOSFET, an IGBT, a thyristor, a reverse blocking IGBT having a reverse blocking capability, serially-connected common IGBT and diode, or another controllable transistor. In addition, the switch unit K may be implemented by a mechanical switch such as a contactor and a relay.

The bypass unit X is configured to, when the voltage Vi of the direct current power supply is not smaller than the voltage required by the bridge inverter 21 to work properly, short-circuit the voltage input end and the voltage output end of the boost circuit 22, to enable the voltage Vh output by the voltage output end to be equal to Vi. The bypass unit X may be a diode as shown in FIG. 3B or another circuit structure.

If the boost circuit 22 can short-circuit the voltage input end and the voltage output end (for example, when the boost circuit as shown in FIG. 3A does not work, Vh = Vi) when the voltage Vi of the direct current power supply is not smaller than the voltage required by the bridge inverter 21 to work properly, the bypass unit X in the inverter apparatus as shown in FIG. 5 may not be used.

If the inverter apparatus as shown in FIG. 5 is used, when the voltage Vi of the direct current power supply is smaller than the voltage required by the bridge inverter 21 to work properly, an external control circuit is used to enable the boost circuit to start working, to enable the output voltage Vh to be not smaller than the voltage required by the bridge inverter 21 to work properly. Meanwhile, the external control circuit controls the switch unit K to enable the drain of the first power switch transistor to be electrically connected to the positive pole of the direct current power supply. In this way, the voltage on the second capacitor C2 is equal to the voltage Vi of the direct current power supply, so that the bridge inverter 21 is capable of not only obtaining the direct current electric energy whose voltage is the voltage Vi from the direct current power supply but also obtaining the direct current electric energy whose voltage is the voltage Vh from the boost circuit 22. In this case, a control pulse is applied to the bridge inverter 21 by using an external control circuit, and then electric potential of the bridge inverter 21 has three levels, that is, Vh, Vi and 0, so that the bridge inverter 21 works in three-level inversion mode.

Only when the bridge inverter 21 outputs the Vh level (when a power switch transistor whose drain is electrically connected to the voltage output end of the boost circuit, for example, the second power switch transistor T22, is conducted), the boost circuit 22 is required to supply output power; however, when another level is output, the direct current power supply still supplies output power to the inverter circuit directly. Therefore, the energy consumption of the boost circuit 22 can be greatly reduced.

In addition, when the voltage Vi of the direct current power supply is smaller than the voltage required by the bridge inverter 21 to work properly, because the bridge inverter 21 works in three-level inversion mode, advantages, such as low switching loss and a small ripple wave of the output inductance, are presented.

When the voltage Vi of the direct current power supply is not smaller than (that is, larger than or equal to) the voltage required by the bridge inverter 21 to work properly, an external control circuit controls the switch unit K to enable the drain of the first power switch transistor to be electrically disconnected from the positive pole of the direct current power supply; and meanwhile controls the boost circuit not to work. The bypass unit starts working, and then Vh is equal to Vi. In this case, the first capacitor C1 and the second capacitor C2 divide Vh to enable the bridge inverter 21 to work in traditional T-type symmetric three-level inversion mode.

In the inverter apparatus as shown in FIG. 5, when the voltage of the direct current power supply is small, the boost circuit and the direct current power supply may simultaneously supply direct current electric energy to the inverter directly, so that the inverter works in three-level inversion mode. This not only reduces the energy consumption of the boost circuit, but also reduces the switching loss of the inverter. In addition, when the voltage of the direct current power supply is large, the boost circuit does not consume electric energy, and because of the voltage divider functions of the capacitors, the inverter can still work in three-level inversion mode, so when compared with the inverter apparatus as shown in FIG. 2, the energy consumption of the inverter apparatus can be further reduced. In this way, when the inverter apparatus is applied to the solar photovoltaic grid-connected system, the efficiency of the entire system can be remarkably improved.

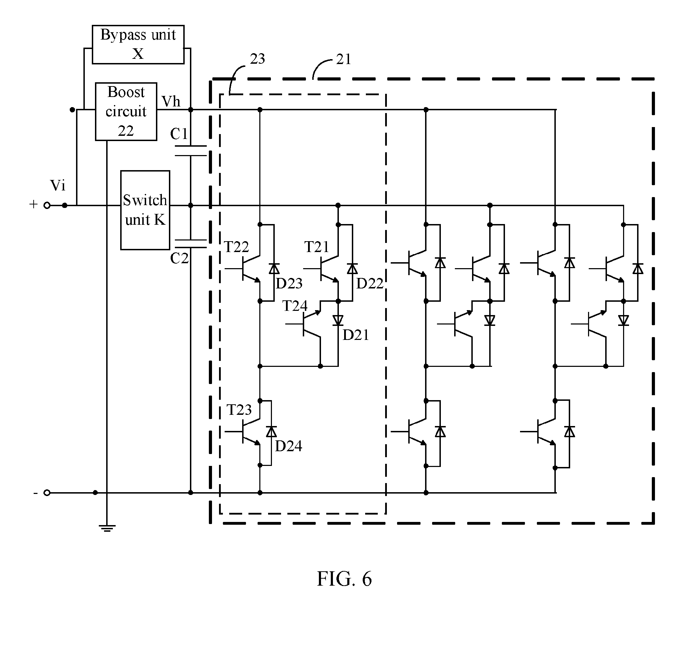

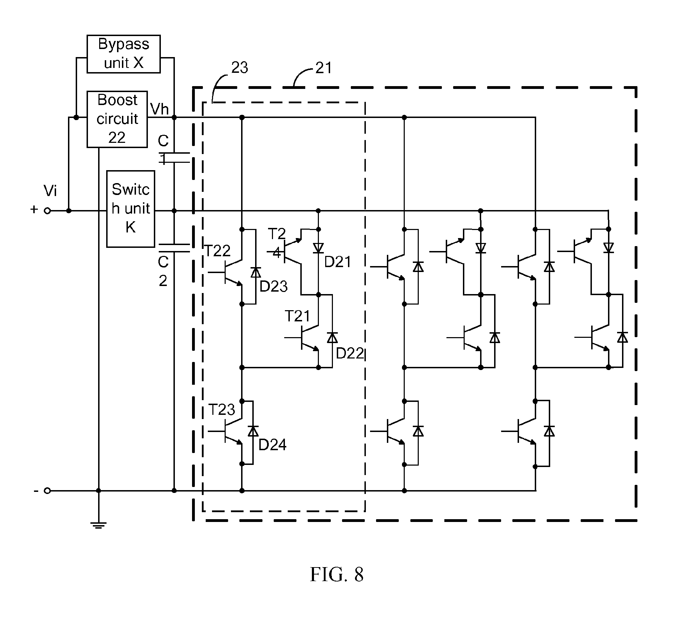

In the inverter apparatus as shown in FIG. 5, the improved solution as shown in FIG. 4A to FIG. 4C may also be used to provide a freewheeling path for the inductive current in the bridge inverter 21, to reduce the ripple wave of the output inductance of the bridge inverter 21 and further reduce the switching loss. For the specific circuit, reference may be made to FIG. 6 to FIG. 8. The parts in FIG. 6 to FIG. 8 which are the same as those in FIG. 5, and FIG. 4A to FIG. 4C use the same reference signs in FIG. 5, and FIG. 4A to FIG. 4C.

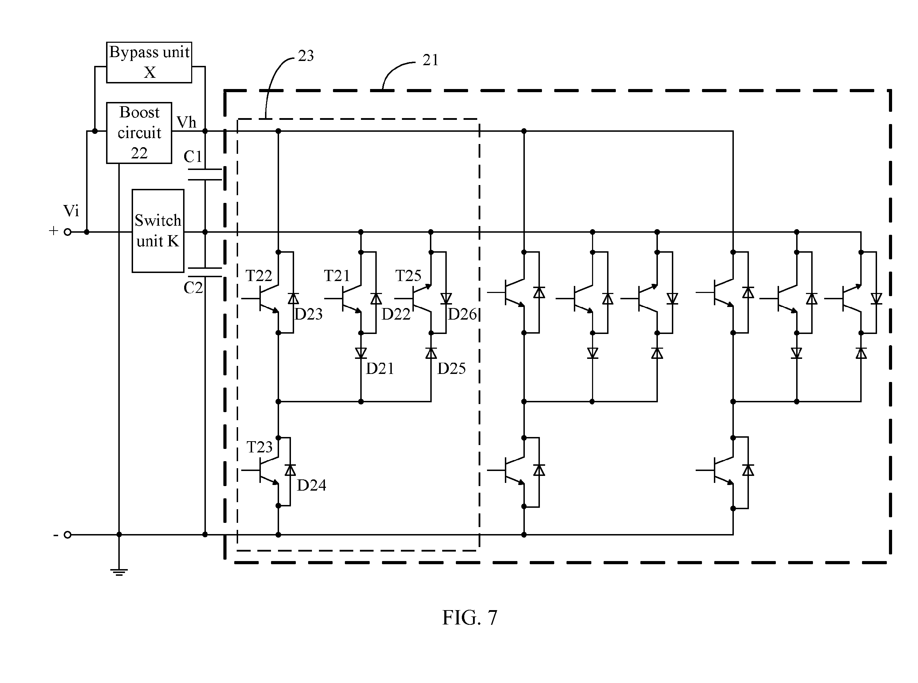

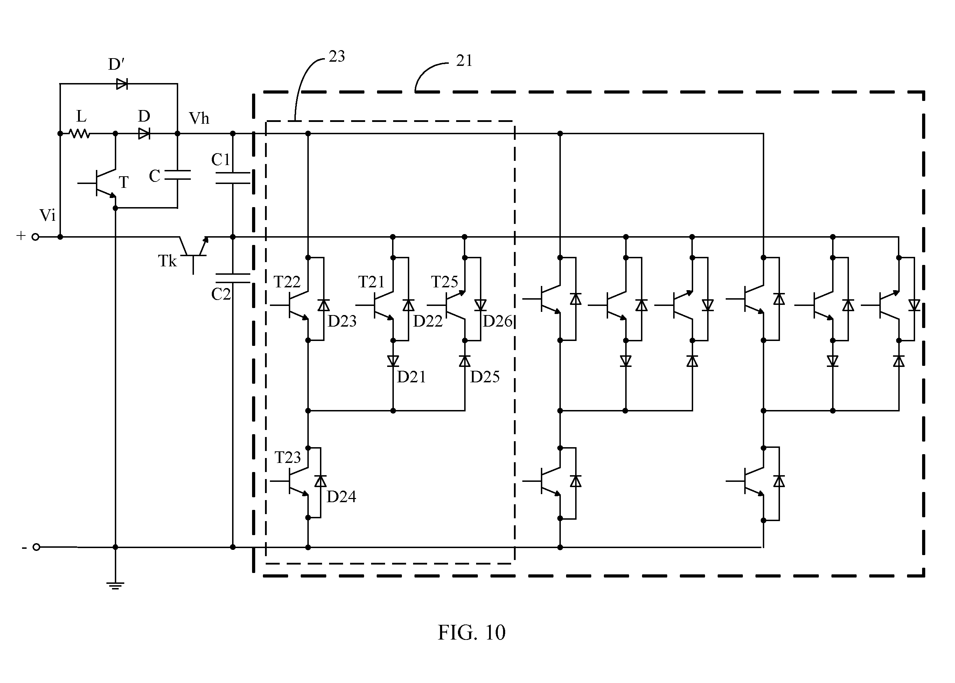

In addition, after the boost circuit and the bypass unit as shown in FIG. 7 are replaced with the circuit as shown in FIG. 3B, and the switch unit as shown in FIG. 7 is replaced with a power switch transistor Tk, a circuit diagram as shown in FIG. 9 is formed. The parts in FIG. 9 which are the same as those in FIG. 7 use the same reference signs in FIG. 7.

### Embodiment 2

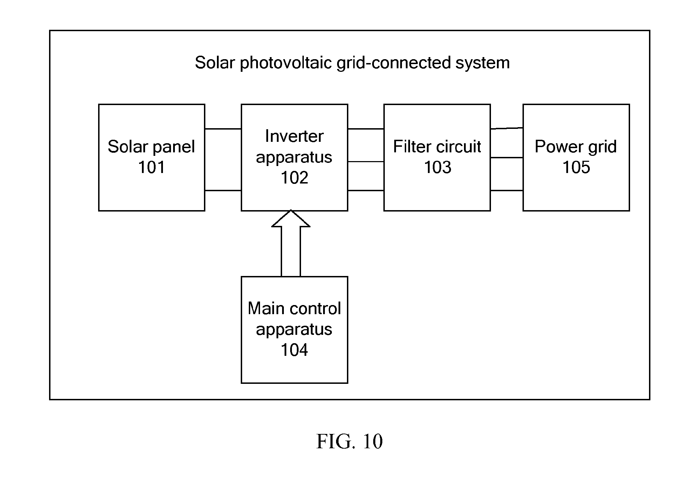

This embodiment provides a solar photovoltaic grid-connected system. As shown in FIG. 10, the system includes: a solar panel 101, an inverter apparatus 102 provided in Embodiment 1, a filter circuit 103, a main control apparatus 104, and a power grid 105. The inverter apparatus 102 is configured to convert the direct current power supply supplied by the solar panel 101 to alternating current power supply by using the main control apparatus 104, and transfer the alternating current power supply to the power grid 105 by filtering of the filter circuit 103 connected between the inverter apparatus 102 and the power grid 105. The specific circuit structure and working principle of the inverter apparatus 102 have been described in detail in Embodiment 1, which are not detailed here again.

In this embodiment, the inverter apparatus provided in Embodiment 1 is used, so the efficiency of the solar photovoltaic grid-connected system can be remarkably improved.

In conclusion, the above is merely about specific implementation of the present invention. However, the protection scope of the present invention is not limited thereto. Changes or replacements readily apparent to a person skilled in the prior art within the technical scope disclosed by the present invention should fall within the protection scope of the present invention. Therefore, the protection scope of the present invention is subject to the protection scope of the claims.

## Claims

1. An inverter apparatus, comprising a bridge inverter and a boost circuit, wherein the bridge inverter comprises at least one bridge arm, the at least one bridge arm comprising: first to third power switch transistors and a first diode; wherein
the first diode and the first power switch transistor form a supplementary branch circuit, wherein the first diode is forward and serially connected to the source and drain of the first power switch transistor; and the current input end of the supplementary branch circuit is electrically connected to the voltage output end of the boost circuit;
the drain of the second power switch transistor is electrically connected to the voltage output end of the boost circuit; the source of the second power switch transistor, the drain of the third power switch transistor, the current output end of the supplementary branch circuit, and an alternating current output end are electrically connected; and the alternating current output end is configured to supply an alternating current voltage/current to a power grid;
the source of the third power switch transistor is electrically connected to the negative pole of a direct current power supply, and the positive pole of the direct current power supply is electrically connected to the voltage input end of the boost circuit; and
the boost circuit is configured to, when a voltage of the direct current power supply is smaller than a voltage required by the bridge inverter to work properly, enable a voltage output by the voltage output end of the boost circuit to be not smaller than the voltage required by the bridge inverter to work properly.

2. The inverter apparatus according to claim 1, further comprising second to fourth diodes, wherein the second diode is reversely and connected in parallel to the source and drain of the first power switch transistor; the third diode is reversely and connected in parallel to the source and drain of the second power switch transistor; and the fourth diode is reversely and connected in parallel to the source and drain of the third power switch transistor.

3. The inverter apparatus according to claim 1 or 2, wherein the at least one bridge arm further comprises a fourth power switch transistor;
wherein the source and drain of the fourth power switch transistor are reversely and connected in parallel to the first diode.

4. The inverter apparatus according to claim 1 or 2, wherein the at least one bridge arm further comprises a fifth power switch transistor and a fifth diode;
wherein the source of the fifth power switch transistor is electrically connected to the current input end of the supplementary branch circuit; the drain of the fifth power switch transistor is electrically connected to the negative pole of the fifth diode; and the positive pole of the fifth diode is electrically connected to the current output end of the supplementary branch circuit.

5. The inverter apparatus according to claim 4, further comprising a sixth diode, wherein the sixth diode is reversely and connected in parallel to the source and drain of the fifth power switch transistor.

6. The inverter apparatus according to claim 2, wherein the boost circuit is further configured to, when the voltage of the direct current power supply is not smaller than the voltage required by the bridge inverter to work properly, short-circuit the voltage input end and the voltage output end.

7. The inverter apparatus according to claim 2, further comprising a bypass unit connected in parallel to the boost circuit;
wherein the bypass unit is configured to, when the voltage of the direct current power supply is not smaller than the voltage required by the bridge inverter to work properly, short-circuit the voltage input end and the voltage output end of the boost circuit.

8. The inverter apparatus according to claim 6 or 7, further comprising a first capacitor, a second capacitor, and a switch unit; wherein
one end of the first capacitor is electrically connected to the voltage output end of the boost circuit, and the other end of the first capacitor, the output end of the switch unit, and one end of the second capacitor are electrically connected;
the input end of the switch unit is electrically connected to the voltage input end of the boost circuit;
the other end of the second capacitor is electrically connected to the negative pole of the direct current power supply; and
the switch unit is configured to, when the voltage of the direct current power supply is smaller than the voltage required by the bridge inverter to work properly, electrically connect the drain of the first power switch transistor and the positive pole of the direct current power supply; and otherwise, electrically disconnect the drain of the first power switch transistor from the positive pole of the direct current power supply.

9. The inverter apparatus according to claim 7, wherein the bypass unit is a seventh diode; wherein the positive pole of the seventh diode is electrically connected to the voltage input end of the boost circuit, and the negative pole of the seventh diode is electrically connected to the voltage output end of the boost circuit.

10. A solar photovoltaic grid-connected system, comprising a solar panel, the inverter apparatus according to any one of claims 1 to 3, a filter circuit, a main control apparatus, and a power grid;
wherein the inverter apparatus is configured to convert direct current power supply supplied by the solar panel to alternating current power supply by using the main control apparatus, and transfer the alternating current power supply to the power grid by using filter of the filter circuit connected between the inverter apparatus and the power grid.
